# EUROPEAN PATENT APPLICATION

(11) **EP 1 482 026 A1**
(43) Date of publication of application: **01.12.2004**
(21) Application number: 03011979.6
(22) Date of filing: 28.05.2003
(51) Int. Cl.: C11D 3/39, C11D 1/72, C11D 1/722, C11D 3/48, A01N 37/16, A01N 25/30

(54) **Biocidic detergent**

(71) Applicant: ECOLAB INC., St. Paul Minnesota 55102 (US)
(72) Inventor: Spanier, Thorsten, 51103 Köln (DE); Merz, Thomas, 40723 Hilden (DE)
(74) Representative: Sternagel, Fleischer, Godemeyer & Partner

(57) **Abstract**

There is provided a disinfecting composition of an organic peroxiacid and a surfactant wherein the organic peroxiacid is selected from phthalimidopercarboxylic acids of the general formula (I) 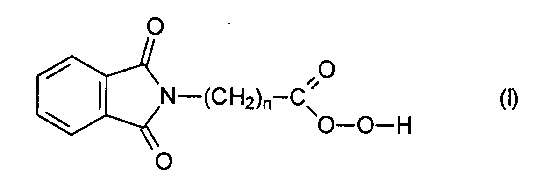 with n being an integer of from 1 to 5, and wherein the surfactant is selected from at least one non-ionic surfactant of the general formula (II),

R¹-(OC₂H₄)ₙ-(OC₃H₆)ₘ-OH (II)

with R¹ representing a linear or branched alkyl or alkenyl group containing 7 to 20 carbon atoms and the sum of the mean degree of ethoxylation n and the mean degree of propoxylation m lying between 0,5 and 7. Moreover a detergent useful for washing, cleansing and disinfecting, which contains the disinfecting composition is described.

## Description

### FIELD OF THE INVENTION

The present invention relates to a disinfecting composition of an organic peroxiacid and a surfactant, and its use in detergents, especially in laundry detergents, cleansers and/or disinfectants.

### BACKGROUND OF THE INVENTION

Especially with respect to the washing of textiles used in hospitals as well as in nursing areas of homes like for example homes for the aged there are strict requirements concerning the effectiveness of disinfecting agents. Generally, corresponding laundries use thermal or chemothermal methods for disinfecting washing. However, thermal disinfection is limited by the properties of the textiles.

Lately, a tendency towards the use of energy saving chemothermal methods can be observed. When applying chemothermal disinfecting procedures usually the disinfecting agent is added separately to liquid, powdered or pasty laundry detergents since the oxidating or bleaching ingredients commonly used in detergents do not exhibit disinfecting properties as well. Especially the known and customary bleaching system perborate/TAED (Tetraacetylethylenediamine) is not appropriate for disinfecting textiles at low temperatures.

Disinfecting agents known in the art are for example peracetic acid containing compositions, compounds releasing active chloride as well as phenol derivatives. Because of the autoxidative effect of chloride and hypohalogenite formulations and the undesirable ecological properties of phenol derivatives, peracetic acid compounds are generally preferred for disinfective purposes. However, these compounds do not sufficiently exhibit their disinfecting properties at temperatures lower than 60°C. Thus, delicate textiles which may not effectively be treated at temperatures above 40°C, cannot be disinfected by this method. The necessity to work at these excised washing temperatures generally represents increased stress to the textiles and accordingly decreases their lifetime. From the economic as well as from the ecological point of view it also would be advantageous to reduce the disinfecting temperature, to save energy, and to maintain colors and textile lifetime.

Moreover, because of their aggressive properties peracetic acid compounds pose problems with respect to safety and handling, requiring specific safety measures like for example automatic dosing which may cause further costs and complicates the operation of the washing machine.

WO 01/48136 A1 describes the decrease of textile-fiber damaging effects induced by the presence of peroxiacids including phthalimidopercarboxylic acids, by using a disinfecting compound of a peroxiacid and a fatty acid, hydrotope, a surfactant and/or a complexing agent.

Phthalimidopercarboxylic acids and especially phthalimidoperoxicaproic acid may be prepared as described in EP 0 325 288 A1 and EP 0 349 940 B1, respectively. Both citations also mention their use as bleaching agents in detergent formulations for medium-low temperature washing.

### SUMMARY OF THE INVENTION

Therefore, there is a need for a chemothermal disinfecting composition which may effectively be used at temperatures lower than 60°C and which does not only exhibit disinfecting properties but which as well serves further purposes in the washing process, for example as a surfactant or a bleaching/oxidizing agent.

The present invention satisfies this need by providing a disinfective composition of an organic peroxiacid and a surfactant wherein the organic peroxiacid is selected from phthalimidopercarboxylic acids of the general formula (I)

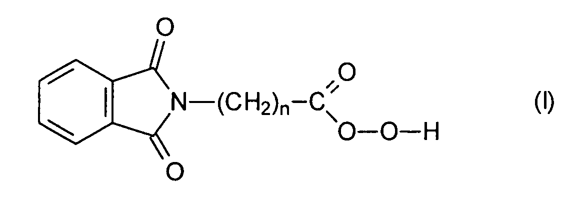

with n being an integer of from 1 to 5, and wherein the surfactant is selected from at least one non-ionic surfactant of the general formula (II),

R¹-(OC₂H₄)ₙ-(OC₃H₆)ₘ-OH (II)

with R¹ representing a linear or branched alkyl or alkenyl group containing 7 to 20 carbon atoms, the sum of the mean degree of ethoxylation n and the mean degree of propoxylation m lying between 0,5 and 7 and the weight ratio of peroxiacid and surfactant preferably being between 20:1 and 1:1, more preferred between 10:1 and 4:1.

### DETAILED DESRIPTION OF THE INVENTION

Phthalimidopercarboxylic acids and especially phthalimidoperoxicaproic acid may be prepared as described in EP 0 325 288 A1 and EP 0 349 940 B1, respectively. Both citations also mention their use as bleaching agents in detergent formulations for medium-low temperature washing. But while EP 0 325 288 does not refer to disinfecting effects of the above compounds at all, EP 0 349 940 B1 just generally mentions the disinfective properties of phthalimidopercaproic acid. However, this characteristic is increased if the non-ionic surfactant according to the present invention is present at the same time.

WO 01/48136 A1 describes the decrease of textile-fiber damaging effects induced by the presence of peroxiacids including phthalimidopercarboxylic acids, by using a disinfecting compound of a peroxiacid and a fatty acid, hydrotope, a surfactant and/or a complexing agent. However, the disinfective compound is used only as disinfactant in combination with a common detergent composition and it is not a part of the detergent composition like in the present invention. Thus, one or more of the above mentioned compounds together with the peroxiacid are further added to a common detergent even if they already are identically contained therein. This leads to increased costs with respect to the higher amount of chemicals needed and to the chemicals having to be degraded after the washing process.

In contrast thereto one of the advantages of the inventive disinfecting composition is that the components represent typical ingredients of detergents, namely the organic peroxiacid functions as well as oxidizing/bleaching agent and the surfactant as cleansing component. Thus, the disinfecting composition does not have to be supplementary added to a common detergent composition but already represents a component thereof. This leads to a reduction in costs, in the total amount of required chemicals for the disinfecting washing process as well as in a simplification of the handling of the washing machine since the detergent exhibiting at the same time disinfecting and cleansing properties may be added in only one step.

Preferably, the weight ratio of peroxiacid to surfactant in the inventive desinfective composition is between 20:1 and 1:1, more preferably between 10:1 and 4:1.

In the composition according to the present invention the phthalimidocarboxylic acid may be selected from phthalimidoperacetic acid, phthalimidoperpropionic acid, phthalimidoperbutyric acid, phthalimidoperamylic acid and phthalimidocaproic acid, wherein phthalimidocaproic acid represents the most preferred organic peroxiacid.

The non-ionic surfactant used in the present invention is represented by the general formula (II),

R¹-(OC₂H₄)ₙ- (OC₃H₆)ₘ-OH (II)

Therein R¹ represents a linear or branched alkyl or alkenyl group containing 7 to 20 carbon atoms. Examples for the group used as R¹ are C₉ - C₁₅ alkyl or alkenyl groups, preferably C₁₃-C₁₅ alkyl or alkenyl groups

The sum of the mean degree of ethoxylation n and the mean degree of propoxylation m ranges from 0,5 to 7. Preferably it is between 1 and 5, and more preferably between 1 and 3.

Preferably an ethoxylated C₁₄₋₁₅ alcohol is used wherein n=4, m=0 and R¹ is C₁₄₋₁₅ and/or an ethoxylated C₁₃₋₁₅ alcohol wherein n=4,m=0 and R¹=C₁₃₋₁₅. The amount of non-ionic surfactant in the product is 1 to 5 wt-%..

In one embodiment of the present invention the disinfective composition is contained in a detergent, said detergent especially being used as laundry detergent for washing laundry and/or as cleanser and/or disinfectant for cleansing and/or disinfecting purposes. The content of organic peroxiacid of the total detergent preferably lies in the range of 3 to 30 percent by weight, more preferably 5 to 20 percent by weight. The detergent containing the disinfective composition according to the present invention may be manufactured in the form of an aqueous solution, gel, emulsion, paste, dispersion, powder, granules, scales, pearls, tablets, solid block form, extrudates and other forms known in the art, but preferably represents a powder. The inventive disinfective composition may be incorporated into the detergent either as such or in combination with further additives, for example boric acid, sulfate, phosphate, carbonate, zeolite, carboxymethylcellulose or filmbuilding agents like fatty acids, fatty acid amides or esters etc. in the forms above mentioned for the detergent or agglomerated. In a preferred embodiment the disinfective composition is added to the other ingredients of the detergent without further additives in form of a powder.

The detergent of the present invention may be used as a laundry detergent, preferably as a textile detergent, and is not only suitable for generally washing laundry, but as well for disinfecting and at the same time mildly washing all kinds of fabrics and textiles commonly used. The laundry detergent is especially appropriate for washing delicate textiles like, for example, ones containing or consisting of wool, silk, polyacryl, rayon, polyamide, actetate.

Since the phthalimidoperoxiacids mainly exhibit their bleaching activity with respect to contaminations like blood, tea or red wine while not attacking the color of the textiles, the detergent containing the disinfective composition of the present invention is as well appropriate for washing colored textiles without excessively bleaching the color of the textile.

Since the phthalimidoperoxiacids launch into disinfecting as well as into bleaching activity at temperatures below 60°C, preferably the detergent of the present invention is applied at temperatures below 60°C, more preferably below 50°C and most preferably below 45°C. This reduction in washing temperature results in saving energy but as well prevents the laundry from rapidly being overstressed by repeated washing applications.

Besides, the detergent according to the present application may be used as cleanser and/or disinfectant for cleansing and disinfecting various kinds of hard surfaces like, for example, in the medicinal or institutional field, in the food preparing, processing and/or selling industry, in agriculture, in hotel business, catering trade and/or in public buildings and/or institutions. It may as well be useful in further applications in which a disinfected surface is required or desired and which are not explicitly mentioned herein. The surfaces supposed to become disinfected may be made of common materials mentioned in the state of the art like, for example, metal, glass, ceramic, plastic, (coated) wood.

Before being used in a washing cycle or in the cleansing and/or disinfecting process the detergent according to the present invention will be diluted with water Preferably, the concentration of the organic peroxiiacid in the diluted detergent should be 0.7 g/L or more.

Apart from the disinfecting composition according to the present invention the detergent may contain any additive or active ingredient commonly used in corresponding washing, cleansing and/or disinfecting agents like builders, surfactans, soaps, zeolites, hydrotropic agents, corrosion inhibitors, enzymes, optical brightners, stabilizers, abrasives, perfumes, coloring agents.

In the following the disinfective composition and its disinfective activity in laundry detergents will be exemplified without being restricted to these examples.

### EXAMPLES

The inventive disinfecting composition was incorporated into a washing detergent and the disinfective activity determined according to the guidelines of DGHM (Deutsche Gesellschaft für Hygiene und Mikrobiologie), published in: Hyg. Med., 23 (1998), p. 127-129. In accordance with this guideline the testing-germs *Enterococcus faecium,* DSM 2146 (K3330), and *Mycobacterium terrae,* DSM 43227 (K3686) were used to determine the disinfecting activity in the following examples. The results obtained therewith are regarded as being transferable to any microbe supposed to be killed in disinfecting measures.

A chemothermic washing method is to be regarded as disinfecting if a reduction of testing-germs on the germ-carrier of greater than 6.78 log-steps within a determined time period at a specific dosage and a prescribed bath ratio of 1:5 is obtained. Moreover, any testing germ must not be detectable in 100 ml washing bath. The laundry was loaded with 12,5 ml defibrinated sheep blood per kg laundry. The contaminated germ-carriers were dried for 3 hours at 37°C before the starting the testing.

The composition of the tested washing compositions according to the present invention as well as the ones commonly used in the art used as comparative examples are presented in table 1. The tests were carried out using a Frista washing machine with a washing bath of 37,5 L, a washing stock of 7,5 kg prewashed; disinfected, dried kitchen towels, thus leading to a bath ratio of 1:5.

In the following examples a product concentration of 5 g/L was applied.

As basic surfactant the following composition is used:

| Compound | amount in wt-% |
|---|---|
| Na-Al-silicate | 35.0 |
| Caustic soda | 0.51 |
| Hydroxyethandiphosphonic acid, Na salt | 0.5 |
| Sulfinic acid, Na salt | 9.12 |
| Stearic/palmitic acid | 1.3 |
| Maleic acid/acrylic acid copolymer, Na-salt | 4.98 |
| C₁₃₋₁₅ Oxoalcohol with 7 EO Einheiten/Mol | 3.5 |
| Water-glass | 4.0 |
| Na-sulfate | 31.5 |
| Water | 9.59 |

As phthalimidoperoxicarboxylic acid PAP EURECO (phthalimidopercaproic acid), obtainable from Solvay, Ausimont.; as non-ionic surfactant according to the present invention a combination of Neodol 45-4, obtainable from Shell, and Lutensol AO4, obtainable from BASF, as comparative bleaching compounds either a combination of Na-perborate . 1H₂O, and TAED or Sodium-2-phenylphenolate x 4H₂O were used.

All values indicated in table 1 refer to percent by weight. The remaining substances adding to 100 percent by weight represent common additives used in washing detergents.

**Table 1**

| Ingredients | Ex. 1 | Ex. 2 | CE 1 | CE 2 | CE 3 | CE 4 | CE 5 |
|---|---|---|---|---|---|---|---|
| Basic surfactant | 70,20 | 59,70 | 65,55 | 62,80 | 66,05 | 68,7 | 55,7 |
| Non-ionic Surfactant | 3,50 | 3,50 | 3,50 | 3,50 | 3,50 | 3,50 | 3,50 |
| PAP | 20,00 | 30,00 | - | - | - | - | - |
| Na-perborate 1H₂O | - | - | 15,00 | 15,00 | 15,00 | - | 10,00 |
| TAED | - | - | 8,15 | 10,90 | 8,15 | - | 3,00 |
| Preventol | - | - | - | - | - | 25,00 | 25,00 |
| Citric Acid | 4,00 | 4,00 | 4,00 | 4,00 | 4,00 | - | - |
| Enzyme | 0,20¹ | 0,70² | 0,50¹ | 0,50¹ | - | 0,70² | 0,70² |
| Others | 2,10 | 2,10 | 3,30 | 3,30 | 3,30 | 2,10 | 2,10 |

| | | | | | | | |
|---|---|---|---|---|---|---|---|
| ¹Duozym A 5 (mixture of protease and amylase), | | | | | | | |
| ²Savinase 16T (Novozyme) | | | | | | | |

In table 2 the results obtained from the determination of the disinfecting effect of the disinfective laundry detergent according to the present invention (Ex. 1 and 2) in comparison with the comparative detergents commonly used in the art (CE 1 to 5) are presented. In each of the testings a first contact time was 5 minutes at 30°C. The duration of the second contact time at 40°C is listed separately in table 2 for each testing. The disinfective effect is determined in form of the reduction factors (RF) obtained as the average of 10 measurements. Moreover, 6 sterile germ-carriers were added to each washing cycle and the germ-growth was determined after an incubation period of 21 days at a temperature of 37°C.

In none of the testings germs were detectable in 100 ml washing bath.

**Table 2**

| | | | | Myobacterium terrae DSM 43227 | Enterococcus faecium DSM 2146 | | |
|---|---|---|---|---|---|---|---|
| | 2^{nd} Contact -time [min] | Germ-count /Germ-carrier | RF | Germ-growth on sterile washed germ-carriers | Germ-count /Germ-carrier | RF | Germ-growth on sterile washed germ-carriers |
| Ex. 1 | 20 | 3 x 10⁷ | >6,78 | negative¹ | 4,37 x 10⁷ | >6,91 | negative² |
| | 40 | 3 x 10⁷ | >6,78 | negative¹ | 4,37 x 10⁷ | >6,91 | negative² |
| Ex. 2 | 40 | 5,17 x 10⁷ | >7,01 | negative³ | 9,57 x 10⁷ | >7,28 | negative² |
| CE 1 | 20 | 4,00 x 10⁷ | <1,90 | positive³ | 7,60 x 10⁷ | 5,71 | positive² |
| CE 2 | 20 | 4,00 x 10⁷ | <1,90 | positive³ | 7,60 x 10⁷ | 4,88 | negative² |
| CE 3 | 20 | 4,00 x 10⁷ | <1,90 | positive³ | 7,60 x 10⁷ | 4,03 | positive^{2,4} |
| CE 4 | 40 | 5,17 x 10⁸ | 3,79 | positive³ | 1,42 x 10⁸ | >7,45 | negative² |
| CE 5 | 40 | 5,17 x 10⁷ | <3,53 | positive³^{,}⁵ | 1,42 x 10⁸ | 5,95 | positive² |

| | | | | | | | |
|---|---|---|---|---|---|---|---|
| ¹Middlebrook-Bouillon, | | | | | | | |
| ²TLH-Thio-Brain-Heart-Bouillon, | | | | | | | |
| ³TLH-Thio-Middlebrook-Bouillon, | | | | | | | |
| ⁴Low growth on 1 of 6 germ-carriers and on subculture on Kanamycin-agar | | | | | | | |
| ⁵low growth on 4 of 6 germ-carriers and on subculture on Middlebrook-agar | | | | | | | |

The above results clearly demonstrate that, in contrast to a combination of non-ionic surfactant and bleaching agent commonly used as laundry detergent, the combination of non-ionic surfactant and organic peroxiacid according to the present invention shows a disinfective activity if used as a laundry detergent with 20 as well as 40 minutes contacting time. Thus, it is no longer necessary to use a disinfective agent additionally to a bleaching agent in a detergent composition, but in the inventive composition one ingredient exhibits both properties. Only examples 1 and 2 according to the invention show a disinfective effect on both germs, namely *Myobacterium terrae* and *Enterococcus faecium.* In contrast thereto examples CE 1 and CE 5 show nodisinfective effect and the comparative examples CE 2-CE 4 only show an effect on *Enterococcus faecium.*

## Claims

1. Disinfecting composition comprising an organic peroxiacid and a surfactant **characterized in that** the organic peroxiacid is selected from phthalimidopercarboxylic acids of the general formula (I) 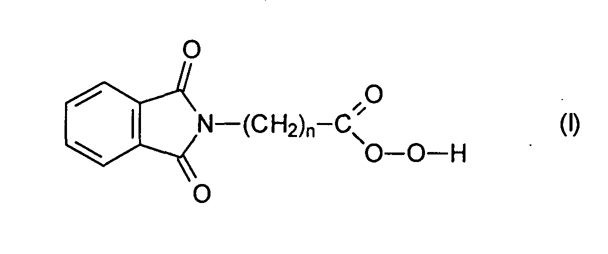 wherein n is an integer of from 1 to 5, and the surfactant is selected from at least one non-ionic surfactant of the general formula (II),
R¹-(OC₂H₄)n-(OC₃H₆)ₘ-OH (II)
wherein R¹ represents a linear or branched alkyl or alkenyl group containing 7 to 20 carbon atoms, the sum of the mean degree of ethoxylation n and the mean degree of propoxylation m lies between 0,5 and 7.

2. Composition according to claim 1, **characterized in that** the weight ratio of peroxiacid to surfactant is between 20:1 and 1:1, preferably between 10:1 and 4:1.

3. Composition according to any of claims 1 or 2, **characterized in that** the sum of the mean degree of ethoxylation n and the mean degree of propoxylation m of the non-ionic surfactant according to formula (II) is between 1 and 5, preferably between 1 and 3.

4. Detergent containing the disinfecting composition according to any of claims 1 to 3, wherein the content of organic peroxiacid of the total detergent is between 3 and 30 percent by weight, preferably between 5 and 20 percent by weight.

5. Detergent according to claim 4, **characterized in that** the detergent is in the form of a powder.

6. Detergent according to any of claims 4 or 5, **characterized in that** the detergent is a textile detergent.

7. Use of a detergent according to any of claims 4 to 6 for washing laundry.

8. Use of the laundry detergent according to claim 7 for washing colored laundry.

9. Use of the laundry detergent according to one of claims 7 or 8 for disinfecting washing.

10. Use of the laundry detergent according to any of claims 7 to 9 for mild washing.

11. Use of the laundry detergent according to claims any of 7 to 10 for disinfecting washing of delicate textiles.

12. Use of the laundry detergent according to any of claims 6 to 11 at temperatures below 60°C, preferably below 50°C and more preferred below 45°C.

13. Use of the laundry detergent according to any of claims 6 to 12, **characterized**
**in that** said detergent is diluted during the washing process to a concentration of 1 to 10 g/L, preferably 4 to 8 g/L.

14. Detergent according to one of claims 4 or 5, **characterized in that** the detergent is a cleanser and/or a disinfectant.

15. Use of the detergent according to any of claims 4, 5 or 14 to cleanse and/or disinfect.

16. Use of the cleanser and/or disinfectant according to claim 14 for cleansing and/or disinfecting surfaces in the medicinal or institutional field, in the food preparing, processing and/or selling industry, in agriculture, in hotel business, in catering trade and/or in public buildings and/or institutions.

17. Use of the cleanser and/or disinfectant according to one of claims 15 or 16, **characterized in that** said cleanser and/or disinfectant are diluted before use.

18. Use of the laundry detergent, cleanser and/or disinfectant according to one of claims 13 or 17, **characterized in that** the diluting agent is water and/or one or more common diluents and/or auxiliaries.
